# EUROPEAN PATENT APPLICATION

(11) **EP 4 776 132 A1**
(43) Date of publication of application: **15.07.2026**
(21) Application number: 25151189.5
(22) Date of filing: 10.01.2025
(51) Int. Cl.: G06F 9/50, G06N 20/00

(54) **SYSTEM AND METHOD FOR PROVIDING A MACHINE LEARNING-BASED DATA PROCESSING SERVICE**

(71) Applicant: NTT DOCOMO, INC., Tokyo 100-6150 (JP)
(72) Inventor: ÜSTOK, Refik Fatih, 80687 Munich (DE); KATSALIS, Konstantinos, 80687 Munich (DE); TRIAY MARQUES, Joan, 80687 Munich (DE); KUNO, Yuya, Tokyo, 100-6150 (JP)
(74) Representative: Viering, Jentschura & Partner mbB Patent- und Rechtsanwälte

(57) **Abstract**

According to one embodiment, a method for providing an machine learning-based data processing service is described, comprising receiving a specification of a data processing task, wherein the specification includes requirements, including goals and/or constraints, of the data processing tasks, determining computational resources for providing the data processing service and training data according to the goals and/or constraints, training a machine learning model using the determined training data and the determined computational resources to perform the data processing task, providing an interface for receiving input data for the data processing task and performing the data processing task on the received input data by the trained machine-learning model using the determined computational resources.

## Description

The present disclosure relates to systems and methods for providing a machine learning-based data processing service.

In a communication network such as a 5G mobile communication network it is important to ensure that a certain service quality can be maintained. For this, network statistical analysis and prediction information which may be generated from information like load, resource usage, available components, state of components etc. may be monitored to be able to take measures, e.g. when overload is imminent, to avoid a drop of service quality, etc. Prediction information may be provided using a machine learning model trained for this purpose. In addition to data processing tasks for network analytics, machine learning models may also be used to perform other data processing tasks in a communication system, e.g. tasks for end users (such as image generation) or control tasks. Accordingly, efficient provision of machine learning-based data processing services in a communication system context are desirable.

According to one embodiment, a method for providing an machine learning-based data processing service is provided, comprising receiving a specification of a data processing task, wherein the specification includes requirements, including goals and/or constraints, of the data processing tasks, determining (and e.g. allocating) computational resources for providing the data processing service and training data according to the goals and/or constraints, training a machine learning model using the determined training data and the determined computational resources to perform the data processing task, providing an interface for receiving input data for the data processing task and performing the data processing task on the received input data by the trained machine-learning model using the determined computational resources.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
Figure 1 shows a mobile radio communication system 100, for example configured according to 5G (Fifth Generation) as specified by 3GPP (Third Generation Partnership Project).
Figure 2 illustrates a MI,(machine learning)-based data processing arrangement according to an intent-based and CCL(closed control loop)-based approach for providing an ML-based data processing service.
Figure 3 illustrates four options for implementing CCLs.
Figure 4 shows a flow diagram illustrating a flow for provision of an ML-based data processing service.
Figure 5 illustrates an implementation option according to a 3GPP system.
Figure 6 illustrates three implementation options in an O-RAN (Open RAN) architecture.
Figure 7 illustrates an implementation option in an ETSI (European Telecommunications Standards Institute) NFV (Network Functions Virtualisation) architecture.
Figure 8 shows a flow diagram illustrating a method for providing a machine learning-based data processing service.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a method for providing a machine learning-based data processing service, comprising receiving a specification of a data processing task, wherein the specification includes requirements, including goals and/or constraints, of the data processing tasks, determining computational resources for providing the data processing service and training data according to the goals and/or constraints, training a machine learning model using the determined training data and the determined computational resources to perform the data processing task, providing an interface for receiving input data for the data processing task and performing the data processing task on the received input data by the trained machine-learning model using the determined computational resources.
Example 2 is the method of example 1, wherein the computational resources and training data are determined by determining computational resources and training data which allow fulfilling the goals and/or constraints.
Example 3 is the method of example 1 or 2, wherein the computational resources comprise data processing nodes (of a data processing network comprising data processing nodes implemented by one or more data processing devices, e.g. of a communication network and/or a cloud network).
Example 4 is the method of example 3, wherein the data processing nodes are data processing nodes at different geographical locations (since e.g. carbon emission of a data processing node typically depends on the geographical location of the data processing node, e.g. because of the local energy source and/or necessary data transmission between data processing nodes and/or storage devices).
Example 5 is the method of any one of examples 1 to 4, wherein determining the computational resources comprises determining first computational resources for training the machine-learning model and second computational resources for performing inference by the machine-learning model to perform the data processing task, wherein the machine learning model is trained using the first computational resources and the trained machine learning model is implemented using the second computational resources.
Example 6 is the method of any one of examples 1 to 5, wherein the goals and/or constraints include one or more of a maximum energy consumption of the training and/or inference performed by the machine learning model, a precision of the machine learning model, an accuracy of the machine learning model, an energy efficiency of the training of the of the machine learning model and/or of the machine learning model and a carbon emission of the training of the machine learning model and/or of the machine learning model.
Example 7 is the method of any one of examples 1 to 6, further comprising memory resources for providing the data processing service according to the goals and/or constraints, training the machine learning model using the determined memory resources and/or implementing the trained machine-learning model using the determined memory resources.
Example 8 is the method of example 7, wherein the memory resources comprise storage nodes (of a network comprising storage nodes implemented by one or more storage devices, e.g. of a communication network and/or a cloud network).
Example 9 is the method of example 8, wherein the storage nodes are storage nodes at different geographical locations (since e.g. carbon emission of a data storage node typically depends on the geographical location of the storage node, e.g. because of the local energy source and/or necessary data transmission between data processing nodes and/or storage devices).
Example 10 is the method of any one of examples 1 to 9, comprising providing results of the data processing task, performed on the received input data via the interface.
Example 11 is the method of any one of examples 1 to 10, comprising receiving the specification from one or more service consumer devices and providing the interface to the one or more service consumer devices.
Example 12 is the method of any one of examples 1 to 11, wherein determining the training data comprises generating the training data using the determined computational resources.
Example 13 is the method of any one of examples 1 to 12, comprising receiving the specification at least partially as attributes of an information class object of an intent model.
Example 14 is the method of example 13, comprising performing training data generation, training and inference by one or more closed control loops.
Example 15 is the method of any one of examples 1 to 14, further comprising checking feasibility of fulfilling the requirements with regard to available computational resources and declining provision of the data processing task in reaction to a determination that fulfilling the requirements is not feasible.
Example 16 is the method of any one of examples 1 to 15, further comprising checking for conflicts caused by performing data processing task and informing a sender of the specification regarding one or more results of performing data processing task.
Example 17 is a data processing arrangement configured to perform the method of any one of examples 1 to 16.

It should be noted that one or more of the features of any of the examples above may be combined with any one of the other examples. In particular, the Examples described in context of the device are analogously valid for the method.

According to further embodiments, a computer program and a computer readable medium comprising instructions, which, when executed by a computer, make the computer perform the method of any one of the above examples are provided.

In the following, various examples will be described in more detail.

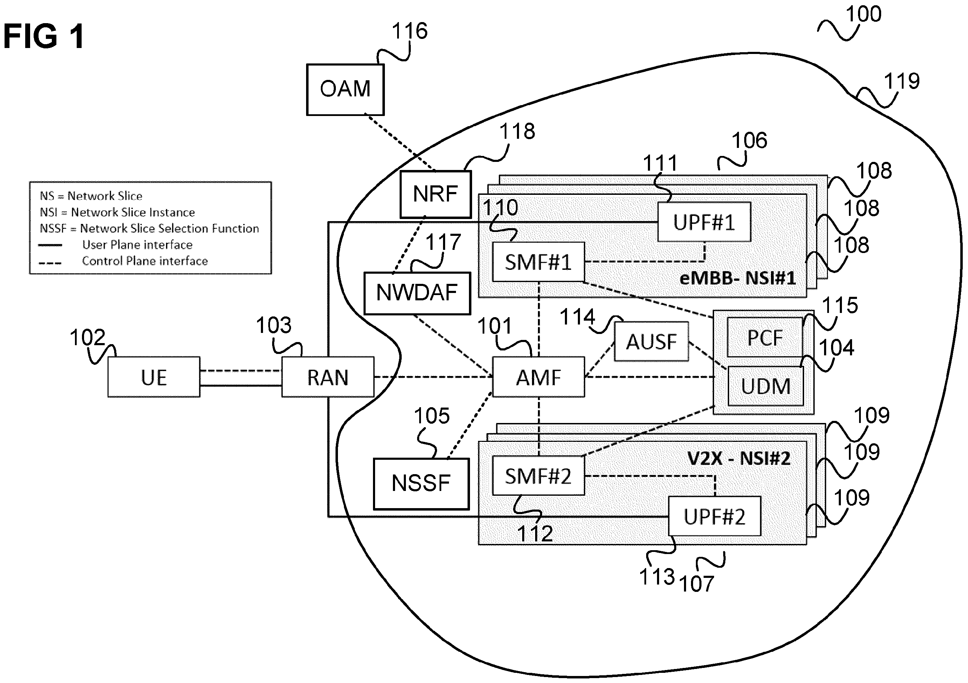

Figure 1 shows a mobile radio communication system 100, for example configured according to 5G (Fifth Generation) as specified by 3GPP (Third Generation Partnership Project).

The mobile radio communication system 100 includes a mobile radio terminal device 102 such as a UE (user equipment), a nano equipment (NE), and the like. The mobile radio terminal device 102, also referred to as subscriber terminal, forms the terminal side while the other components of the mobile radio communication system 100 described in the following are part of the mobile communication network side, i.e. part of a mobile communication network (e.g. a Public Land Mobile Network PLMN).

Furthermore, the mobile radio communication system 100 includes a Radio Access Network (RAN) 103 (e.g. NG(Next Generation)-RAN), which may include a plurality of radio access network nodes, i.e. base stations configured to provide radio access in accordance with a 5G (Fifth Generation) radio access technology (5GNew Radio). It should be noted that the mobile radio communication system 100 may also be configured in accordance with LTE (Long Term Evolution) or another mobile radio communication standard (e.g. non-3GPP accesses like WiFi) but 5G is herein used as an example. Each radio access network node may provide a radio communication with the mobile radio terminal device 102 over an air interface. It should be noted that the radio access network 103 may include any number of radio access network nodes.

The mobile radio communication system 100 further includes a core network (5GC) 119 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository). The core network 119 further includes an AUSF (Authentication Server Function) 114 and a PCF (Policy Control Function) 115.

The core network 119 may have multiple core network slices 106, 107 and for each core network slice 106, 107, the operator (also referred to MNO for Mobile Network Operator) may create multiple core network slice instances 108, 109. For example, the core network 119 includes a first core network slice 106 with three core network slice instances (CNIs) 108 for providing Enhanced Mobile Broadband (eMBB) and a second core network slice 107 with three core network slice instances (CNIs) 109 for providing Vehicle-to-Everything (V2X).

Typically, when a core network slice is deployed (i.e. created), network functions (NFs) are instantiated, or (if already instantiated) referenced to form a core network slice instance and network functions that belong to a core network slice instance are configured with a core network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113. The SMFs 110, 112 are for handling PDU (Protocol Data Unit) sessions, i.e. for creating, updating and removing PDU sessions and managing session context with the User Plane Function (UPF).

The RAN 103 and the core network 119 form the network side of the mobile radio communication system, or, in other words, form the mobile radio communication network. The mobile radio communication network and the mobile terminals accessing the mobile radio communication network form, together, the mobile radio communication system.

The mobile radio communication system 100 may further include an OAM (Operation, Administration and Maintenance) function (or entity) 116, e.g. implemented by one or more OAM servers which is connected to the RAN 103 and the core network 119 (connections are not shown for simplicity). The OAM 116 may include an MDAS (Management Data Analytics Service). The MDAS may for example provide an analytics report regarding network slice instance load. Various factors may impact the network slice instance load, e.g. number of UEs accessing the network, number of QoS flows, the resource utilizations of different NFs which are related with the network slice instance. Further, the core network 119 comprises a Network Data Analytics Function (NWDAF) 117 and a NRF (Network Repository Function) 118.

Components of the communication system 100, like a network function or any management function or a mobile network operator of the communication system 100 may require analytics information, i.e. network analysis and/or prediction information. For example, a network function may request specific analysis information on the load level of a particular network slice instance and control network operations based on this information. For example, when a network slice instance is detected or forecast to experience service experience degradation, new UE registrations or PDU sessions may not be assigned to that network slice instance anymore by triggering a network slice load distribution mechanism.

To generate the network analysis and/or prediction information, AI (artificial intelligence), specifically ML (machine learning), i.e. one or more machine learning models, may be used. In other words, the provision of network analysis and/or prediction information may be an ML-based data processing service. Other examples of ML-based data processing service are tasks optimizing the energy usage, configuring/ updating policies or other controlling or management tasks.

Provision of such an ML-based data processing service is a complex task which may require a high number of resources, since it requires training of a suitable ML model and thus the generation and selection of training data and also inference using the trained ML model may be computationally intensive. According to various embodiments, an approach is provided which gives the consumer of the ML-based data processing service control over the resources used, e.g. to allow the consumer to avoid that a ML-based data processing service used which leads to disproportionately high energy usage. The approach also allows the consumer of the ML-based data processing service to specify other targets (including goals and constraints (i.e. requirements)) such as a performance target (e.g. accuracy or delay) etc. According to various embodiments, this is achieved by using an intent-based approach. The approach may further be CCL (closed-control loop)-based.

Closed Control Loop (CCL) is a type of control mechanism that monitors and regulates a set of managed entities with the objective of achieving a specific goal. A CCL can be logically decomposed into several stages, each providing a specific functionality and where the stages work together to achieve the stated goal. An example is MAPE-K (Monitor Analyse Plan Execute - Knowledge).

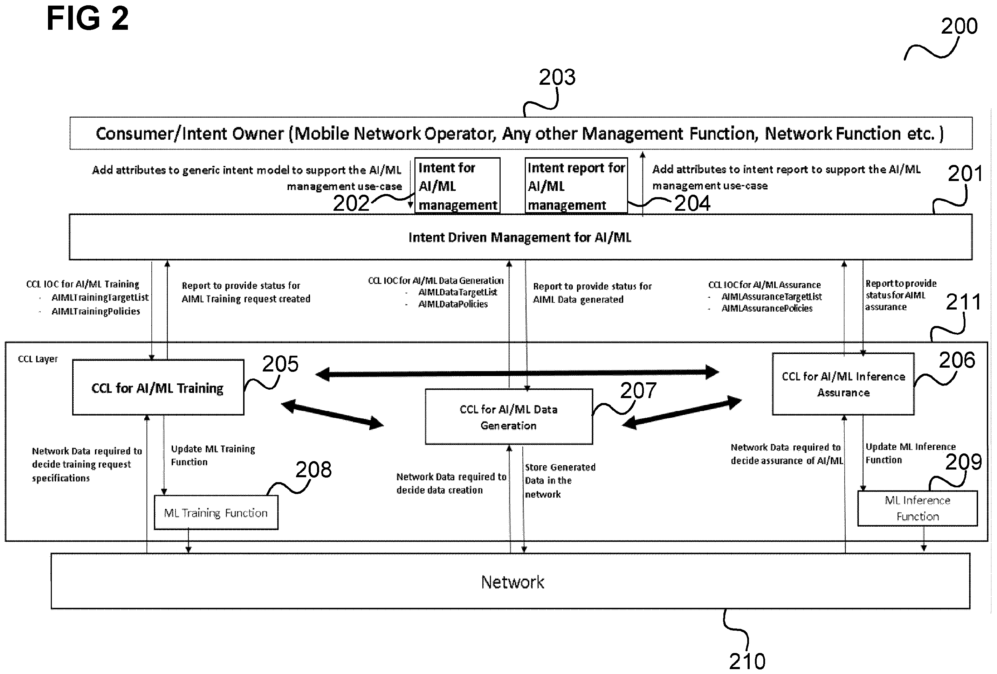

Figure 2 illustrates a ML-based data processing arrangement 200 according to an intent-based and CCL-based approach for providing an ML-based data processing service.

The ML-based data processing arrangement 200 comprises an intent handler 201 for intent driven management of artificial intelligence (AI) or machine learning (ML) models (herein referred to as "AI/ML" or "AIML"). The intent handler 201 is configured to receive an intent description 202 from a consumer of the ML-based data processing service, acting as intent owner 203 in this intent-based approach, wherein the intent can be seen as a request (and specification) for a ML-based data processing service. The intent handler 201 handles the intent described by the intent description 202 and sends a corresponding intent report 204 back to the intent owner 203. Reports can be sent periodically, upon request or after the processing task has been completed.

The intent handler 201 handles the intent by making use of a CCL layer 211, i.e. an arrangement of various CCLs 205, 206, 207. Additional CCLs can be also considered. According to one embodiment, this includes a CCL for model training 205, a CCL for inference (in particular inference assurance) 206 and a CCL for training data generation 207. The CCL for model training 205 uses an ML training function 208 for training an ML model. The ML training function 208 may be a network component of a communication network 210 (e.g. the same to which then intent owner 203 belongs, e.g. corresponding to the communication system 100, e.g. an NWDAF MTLF (Model Training Logical Function), e.g. corresponding to or included in the NWDAF 117). It could be a separate entity or could be part of the CCL for model training 205. The CCL for model training 205 for example updates the ML training function 208 according to training goals and/or constraints and provides the training data it obtains from the CCL for training data generation 207.

An ML inference function 209 uses the trained ML model to perform inference, i.e. to perform the actual ML-based data processing and provide the results to the intent owner 203 and/or a network component 210 (depending on which entity should receive the processing results). The intent handler 201, for example, provides an interface between the intent owner 203 and the ML inference function 209 to allow provision of input data to the ML inference function 209 and provision of output data (i.e. results of the data processing) back to the intent owner 203.

The ML Inference Function 209 could be a separate entity or could be part of the CCL for AI/ML Inference assurance 206.

The CCL for inference 206 monitors the inference performed by the ML inference function 209 and for example updates the ML inference function 209 according to monitoring results or new versions of the model it obtains from the CCL for model training 205.

The CCLs 205, 206, 207 may consult components of the network 210 for information required to decide about and perform training, data generation and inference, respectively. The network 210 can also be seen as a managed entity (from the point of view of the management performed by the CCLs). It refers to the set of computational, communication and storage resources that the CCLs may use for training, data generation and inference (including e.g. also provision of an interface to the ML inference function as mentioned above).

The CCL for data generation 207 decides necessary training data requirements, generates necessary training data, for example using Generative AI methods, and stores generated training data in a component of the network 210 from where the CCL for model training 205 may retrieve it.

The ML-based data processing arrangement 200 may operate according to the intent model according to 3GPP (in particular 3GPP TS 28.312). According to 3GPP, an intent is a specification of requirements, including goals and constraints, given to a system, without specifying how to achieve them. An intent handler (or intent handling function), such as the intent handler 201, receives the intents, decides which actions must be taken to optimally fulfil all given intents and implements its decisions. For this, an intent handler typically has a knowledge base that contains the intent ontology. They may also have machine-reasoning capabilities to realize knowledge-driven decision-making processes. The following terms are further defined in the context of intents according to 3GPP:
- Intent Expectation: In the most basic form, a consumer may use an intent to express to the producer the need for: "an object O with characteristics S" where the characteristics S reflect the requirements, goals and contexts for an object.
- Expectation Targets: For a given intent expectation, the desired characteristics of the object(s) are the expectation targets to be achieved (e.g. specified in the intent description 202). The expectation targets may include the metrics that characterize the performance of the object(s) or some abstract index that expresses the behaviour of the object(s). A given intent expectation may include multiple expectation targets on the same object or on different objects with the same properties.
- Expectation Objects: The object (s) for which a given expectation is addressed can be expressed with the object's identifier. This may, however, not always be adequate (e.g. if the consumer does not have or know the identifiers of the object) for some intents.
- Context: describes the applicability constraints and conditions that may apply to the intent and its information elements.
- FulfilmentInfo describes the fulfilment related information for an aspect of the intent (i.e. either an expectation, an expectation target, a condition or the whole intent).
- IntentReport (e.g. corresponding to the intent report 204)describes the information provided by the Intent Handler to the subscribing entity or Intent Owner about status and progress regarding the received intent.

Based on 3GPP TR 28.867, intent handlers can be implemented with the support of one or more CCLs, in that case intent handler is responsible to delegate the intent to the right CCL to process the intent. Automation functions and other CCLs can take part in different stages of a CCL. According to various embodiments, the intent handler acts as a CCL coordination entity (e.g. according to 3GPP TR 28.867).

In the present use case of an ML-based data processing service requested by a consumer by acting as an intent owner 203 specifying an intent, the intent owner 203 can for example specify a training Request IOC (Information Object Class, e.g. according to 3GPP TS 28105 and TR 28858) with the following information: mLTrainingType, potentialInferenceScope, a clustering criteria indicating which ML models can form a cluster, datasetStatisticalProperties, dataset Source, the requirement for distributed training, e.g. total training time, computing resources, suggested nNodes etc.

However, in some cases, the intent owner 203 may not know how to specify or may not be aware about the total (computational, memory and/or energy consumption or carbon emission) cost.

Therefore, according to various embodiments, the ML-based data processing arrangement 200 - specifically the intent handler 201 - is configured to allow the intent owner 203 to specify expectations (i.e. targets and goals and/or constraints), e.g. in the form of one or more KPIs (key performance indicators) and possibly some context, for example
- Expected (maximum) energy consumption
- Expected (maximum) carbon emissions
- Expected maximum training time
- Expected (minimum) accuracy, precision
- Context for preferred AI scope that indicates the type of inference that the ML model (i.e. the model used for the data processing of the ML-based data processing service) should support, i.e. in terms of MDA (Management Data Analytics) type (e.g. according to 3GPP TS 28.104), Analytics ID(s) of NWDAF (e.g. according to 3GPP TS 23.288), types of inference for NG-RAN (e.g. according to 3GPP TS 38.300 and TS 38.401)
- Context for time related attributes: start time of training, deadline for training etc.

The intent owner 203 may use for example use attributes of (or added to) a generic intent model to specify these expectations. For example, the generic intent expectation of 3GPP TS 28.312 may be extended with new attributes and definitions for defining expectations for an ML-based data processing service (i.e. an ML model, in the following referred to as AI/ML model) as indicated in tables 1 to 6.

**Table 1: object type for AI/MI, model**

| **Attribute** | **Allowed Values** |
|---|---|
| objectType (CM) | AI/ML Model |
| objectInstance (CM) | DN of AI/ML Model |

Regarding table 1, it should be noted that in case the intent expectation is not for a specific AI/ML model, or an AI/ML model has not been created yet, objectType is provided by the intent owner 203 in the intent description 202. In case expectation is provided for a specific AI/MI, model, DN of AI/ML model is provided by the intent owner 203 in the intent description 202.

**Table 2: Object contexts for AI/MI, model**

| **Attribute Name** | **Support Qualifier** | **is Readable** | **is Writable** | **is Invariant** | **is Notifyable** |
|---|---|---|---|---|---|
| AIMLScopeContext | O | T | T | F | F |
| geoContext | O | T | T | F | F |
| pLMNContext | O | T | T | F | F |
| rATContext | O | T | T | F | F |
| uEGroupContext | O | T | T | F | F |
| dataSourceContext | O | T | T | F | F |

**Table 3: Expectation Targets for AI/ML model**

| **Attribute Name** | **Support Qualifier** | **is Readable** | **is Writable** | **is Invariant** | **is Notifyable** |
|---|---|---|---|---|---|
| aIMLEnerg yEfficiency Target | O | T | T | F | F |
| aIMLEnerg yConsumpti onTarget | O | T | T | F | F |
| aIMLCarbo nEmissionT arget | O | T | T | F | F |
| aIMLPerfor manceTarge t | O | T | T | F | F |
| aIMLMaxTr ainingTime Target | O | T | T | F | F |

**Table 4: Expectation context for AI/MI, model**

| **Attribute Name** | **Support Qualifier** | **is Readable** | **is Writable** | **is Invariant** | **is Notifyable** |
|---|---|---|---|---|---|
| targetTime Context | O | T | T | F | F |

**Table 5: detailed description of Object Contexts for AI/ML model of table 2**

| **Attribute Name** | **Description and Allowed Values** | **Properties** |
|---|---|---|
| AIMLScopeContext | AI scope that indicates the type of inference that the ML model should support. | type: Context multiplicity: 1 |
| | Following can be the allowed values: | isOrdered: N/A |
| | -contextAttribute: "aIMlScopeContext" | isUnique: N/A |
| | -contextCondition: "IS_ALL_OF" | defaultValue: |
| | -contextValueRange: a list of values of the MDA | None |
| | type (3GPP TS 28.104), Analytics ID(s) of NWDAF (3GPP TS 23.288), types of inference for NG-RAN (see TS 38.300 and TS 38.401) | isNullable: True |
| geoContext | It describes the geographical areas for the AIML model that the intent expectation is applied in the form of polygon. | type: Context multiplicity: 1 |
| | | isOrdered: N/A |
| | geoContext is a Context including attributes: | isUnique: N/A |
| | contextAttribute, contextCondition and contextValueRange. | defaultValue: |
| | | None |
| | Following are the allowed values: | isNullable: True |
| | -contextAttribute: "geoContext" | |
| | -contextCondition: "IS_ALL_OF" | |
| | -context ValueRange: a list of GeoArea defined in 3GPP TS 28. 622 | |
| rATContext | It describes the RAT to be supported by the AIML model that the intent expectation is applied. | type: Context multiplicity: 1 |
| | | isOrdered: N/A |
| | RATContext is a Context including attributes: | isUnique: N/A |
| | contextAttribute, contextCondition and contextValueRange. | defaultValue: |
| | | None |
| | Following are the allowed values: | isNullable: True |
| | -contextAttribute: "rAT" | |
| | -contextCondition: "IS_ALL_OF" | |
| | -contextValueRange: a list of ENUM with allowed value: UTRAN, EUTRAN and NR | |
| uEGroupContext | It describes the UE Groups (represented by specific 5QI, specific S-NSSAI, or specific combination of S-NSSAI and 5QI) that the intent expectation of AIML model is applied. | type: Context multiplicity: 1 |
| | | isOrdered: N/A |
| | | isUnique: N/A |
| | | defaultValue: |
| | | None |
| | UEGroupContext is a Context including attributes: contextAttribute, contextCondition and contextValueRange. | isNullable: True |
| | Following are the allowed values: | |
| | -contextAttribute: "UEGroup" | |
| | -contextCondition: "IS_ALL_OF" | |
| | -contextValueRange: a list of UEGroup | |
| | «dataType» | |
| dataSourceContext | It describes the context which candidate training data sources provided by the consumer | type: Context multiplicity: 1 |
| | -contextAttribute: "aIMlScopeContext" | isOrdered: N/A |
| | -contextCondition: "IS_ALL_OF" | isUnique: N/A |
| | -contextValueRange: a list of values of address of the candidate training data source. | defaultValue: |
| | | None |
| | | isNullable: True |

**Table 6: detailed description of Expectation Targets for AI/ML model of table 3 and Expectation Context of table 3**

| **Attribute Name** | **Description and Allowed Values** | **Properties** |
|---|---|---|
| aIMLEnergyEfficiencyTarget | It describes the AIML energy efficiency target for AIML model that the intent expectation is applied. The unit of this target is bit/J. The definition for AIML Energy Efficiency is not standardized yet. | type: Context multiplicity: 1 |
| | | isOrdered: N/A |
| | | isUnique: N/A |
| | | defaultValue: |
| | | None |
| | | isNullable: True |
| | Following are the allowed values: | |
| | -targetName: " | |
| | aIMlEnergyEfficiency" | |
| | -targetCondition: " | |
| | IS_GREATER_THAN" | |
| | -targetValueRange: | |
| | Integer | |
| aIMLEnergyConsumptionTarget | It describes the AIML energy consumption target for AIML model that the intent expectation is applied. The definition for AIML Energy | type: ExpectationTarget |
| | | multiplicity: 1 |
| | | isOrdered: N/A |
| | | isUnique: N/A |
| | | defaultValue: |
| | Consumption is not standardized yet. | None |
| | | isNullable: True |
| | Following are the allowed values: | |
| | -targetName: " aIMlEnergyConsumption" | |
| | -targetCondition: " IS LESS THAN" | |
| | -targetValueRange: | |
| | Integer | |
| aIMLCarbonEmissionTarget | It describes the AIML carbon emission target for AIML model that the intent expectation is | type: ExpectationTarget |
| | | multiplicity: 1 |
| | | isOrdered: N/A |
| | applied. The definition for AIML Carbon Emission is not standardized yet. | isUnique: N/A |
| | | defaultValue: |
| | | None |
| | Following are the allowed values: | isNullable: True |
| | -targetName: " | |
| | aIMlCarbonEmission" | |
| | -targetCondition: " | |
| | IS LESS THAN" | |
| | -targetValueRange: | |
| | Integer | |
| aIMLPerformanceTarget | It describes the AIML performance target for AIML model that the intent expectation is applied. Performance target can be a combination of accuracy, precision and F1 score and how to compute it can be vendor specific | type: ExpectationTarget |
| | | multiplicity: 1 |
| | | isOrdered: N/A |
| | | isUnique: N/A |
| | | defaultValue: |
| | | None |
| | | isNullable: True |
| | Following are the allowed values: | |
| | -targetName: " | |
| | aIMlPerformance" | |
| | -targetCondition: " | |
| | IS_GREATER_THAN" | |
| | -targetValueRange: | |
| | Integer | |
| aIMLMaxTrainingTimeTarget | It describes the AIML maximum training time for AIML model that the intent expectation is applied. Following are the allowed values: | type: ExpectationTarget |
| | | multiplicity: 1 |
| | | isOrdered: N/A |
| | | isUnique: N/A |
| | | defaultValue: |
| | -targetName: " | None |
| | alMIMaxTrainingTime" | isNullable: True |
| | -targetCondition: " | |
| | IS LESS THAN" | |
| | -targetValueRange: | |
| | Integer | |
| targetTimeContext | It describes the timeWindows (including startTime, endTime) when the targets in the Intent Expectation need to be assured. | type: Context multiplicity: 1 |
| | | isOrdered: N/A |
| | | isUnique: N/A |
| | | defaultValue: |
| | | None |
| | -context Attribute: | isNullable: True |
| | "targetAssuranceTime" | |
| | -contextCondition: | |
| | "IS_EQUAL_TO" | |
| | -contextValueRange: a list of TimeWindow(s) defined in TS 28.622. | |

According to various embodiments, the intent report 204 (e.g. according to 3GPP TS 28.312) inherits the AI/ML Expectations (e.g. as described in the above tables) to provide a fulfilment and conflict report for each expectation target.

The intent report 204 can also include conflicts of multiple AI/ML expectations (e.g. Training process of Reinforcement learning - the RL agents can take conflicting actions which may result in training conflict- this can be reported as a conflict with another AI/ML expectation). The intent owner 203 can be provided by the intent handler 202 with feasibility (or infeasibility) check results by means of the intent report 204 specifying whether an AI/ML model expectation is feasible (i.e. can be met) or not.

To support feasibility check results, the intent report 204 can include, e.g. as an infeasibilityReasons (or infeasibilityReasons ) attribute, (in)feasibility reasons specific to AI/ML model expectations - for example lack of data, lack of computational resources etc.

The CCLs 205, 206, 207 may, to provide their functionalities, use network components (e.g. of the communication system 100), e.g. network functions such as an NWDAF MTLF (Model Training Logical Function), e.g. corresponding to or included in the NWDAF 117.

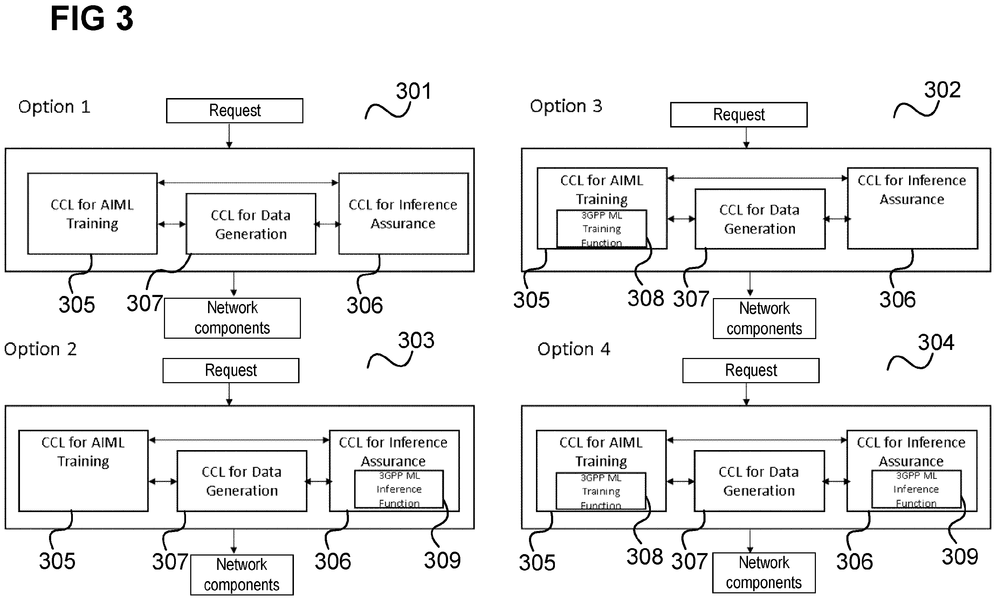

Figure 3 illustrates four options 301-304 for the CCL 305, 306, 307 (corresponding to the CLLs 205, 206, 207) of the CCL layer 211.

In the first option 301, the CCLs 305, 306, 307 do not rely on network components (e.g. of the communication system 100) but provide their functionalities by themselves.

In the second option 302, the CCL for model training 305 uses a (e.g. 3GPP) network ML training function 308.

In the third option 303, the CCL for inference 306 uses a (e.g. 3GPP) ML inference function 309.

In the fourth option 304, the CCL for model training 305 uses a (e.g. 3GPP) network ML training function 308 and the CCL for inference 306 uses a (e.g. 3GPP) ML inference function 309.

The intent owner 203 for example sends a specification of training targets and training policies to the CCL for model training 205, 305 and receives in response (e.g. repeatedly) a report to indicating a status of the requested training.

For example, the intent owner 203 sends an IOC for AI/ML Training with following dataTypes to capture a consumer request
- A «dataType» AIMLTrainingTargetList which can include a list of AIML Model Training targets including
   ∘ Accuracy Target
   ∘ Precision Target
   ∘ F1 Score Target
   ∘ Energy Consumption
   ∘ Energy Efficiency
   ∘ Carbon Emission
- A «dataType» AIMLTrainingPolicyList which can include a list of AIML Model Policies
   ∘ Training type (Training, pre-training, fine-tuning)
   ∘ Preferred Nodes
   ∘ Intended Start Time
   ∘ Intended End Time
   ∘ Threshold KPIs when re-training
   ∘ SourceTrainedMLModel reference

In response, as report regarding training, the CCL for model training 205, 305 for example sends a report with
- Epoch number (of an ongoing training process)
- Training Time
- Energy Consumption at training
- Energy Efficiency at training
- Carbon Emission at training
- Predicted accuracy rate
- Predicted precision rate
- Predicted F1 score
- Any training conflict
- Node(s) that training took place
- Any other results that can be provided by 3GPP ML Training Function (e.g. according to 3GPP TS 28.105)

The intent owner 203 for example sends a specification of inference targets and inference policies to the CCL for inference 206, 306 and receives in response (e.g. repeatedly) a report to indicating a status of the requested inference.

For example, the intent owner sends an IOC for AI/ML inference with following dataTypes to capture the consumer request
- A «dataType» AIMLInferenceAssuranceTargetList which can include a list of AI/MI, Inference targets (in particular inference assurance targets) including
   ∘ Accuracy Target (for an ML model to be monitored by the CCL for inference 206, 306)
   ∘ Precision Target
   ∘ F1 Score Target
   ∘ Energy Consumption Target
   ∘ Energy Efficiency Target
   ∘ Carbon Emission Target
- A «dataType» AIMLInferenceAssurancePolicyList which can include a list of AIML Model Policies
   ∘ Preferred Actions to be triggered or suggested if target is not met (Re-training, fine-tuning, data generation etc.)
   ∘ Threshold KPIs
   ∘ Intended Start Time
   ∘ Intended End Time

In response, as report regarding inference, the CCL for inference 206, 306 for example sends a report with
- Accuracy rate (of the monitored ML model)
- Precision rate
- F1 Score
- Energy consumption measurement
- Energy efficiency rate measurement
- Carbon emission rate measurement
- Actions to take (Re-training, fine-tuning, data generation, etc.)
- Any other results that can be provided by 3GPP ML Inference Function (TS 28.105)

The intent owner 203 for example sends a specification of training data generation targets and training data generation policies to the CCL for data generation 207, 307 and receives in response (e.g. repeatedly) a report to indicating a status of the requested training data generation.

For example, the intent owner sends an IOC for AI/ML (training) data generation following dataTypes to capture the consumer request
- A «dataType» DataGenerationTargetList which can include a list of AIML Data Generation targets including
   ∘ Target RAT
   ∘ Target UE Group
   ∘ AIML Scope
- A «dataType» AIMLDataGenerationPolicyList which can include a list of AIML Model Policies
   ∘ Preferred Nodes to store data
   ∘ Intended Start Time
   ∘ Intended End Time
   ∘ Threshold KPIs to generate Data (i.e. accuracy rate is below a threshold)

In response, as report regarding training data generation, the CCL for training data generation 207, 307 for example sends a report with data statistics of the generated training data such as
- Mean
- Median
- Standard deviation
- Variance etc.

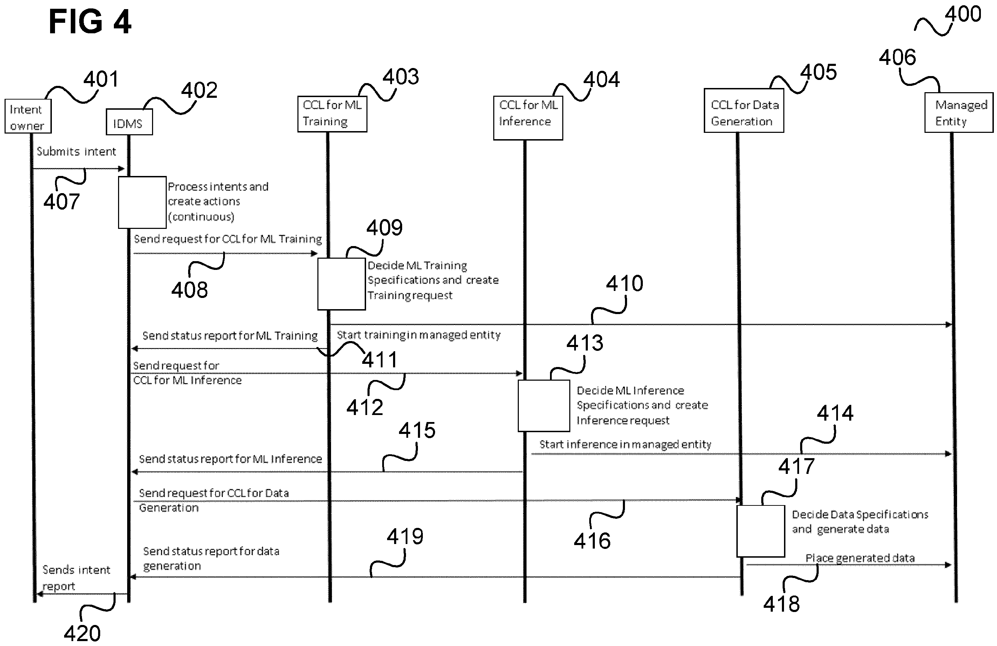

Figure 4 shows a flow diagram 400 illustrating a flow for provision of an ML-based data processing service.

An intent owner 401, an intent handler 402 (here denoted as IDMS for Intent Definition and Management System), a CCL for model training 403, a CCL for ML inference 404, a CCL for data generation 405 and a managed entity 406 are involved in the flow. The managed entity 406 is for simplicity assumed to be an entity doing both the training and the data processing by means of the (trained) ML model but these tasks can also be performed by separate entities (e.g. different network functions and/or data processing devices or systems). The managed entity 406 can for example be a communication network having resources for both training and inference.

In 407, the intent owner 401 submits an intent (by sending an intend description) to the intent handler 402.

In 408, the intent handler 402 sends a request to train an ML model to the CCL for model training 403.

In 409, the CCL for model training 403 decides about ML training specifications and creates a training request which it transmits to the managed entity 405 in 410 to start training (assuming that training data is already present). Deciding about ML training specifications may in particular comprise determining which resources of the managed entity 405 are used for the training (e.g. which data processing nodes, which storages, e.g. in terms of geographical location since this may affect energy consumption, etc.)

In 411, the CCL for model training 403 reports the status of model training to the intent handler 402. When training has been completed, the intent handler 402 sends a request to the CCL for inference 404 in 412.

In 413, the CCL for inference 404 decides about inference specifications and creates an inference request which it transmits to the managed entity 405 in 414 to start inference. Deciding about inference specifications may in particular comprise determining which resources of the managed entity 405 are used for inference (e.g. which data processing nodes, which storages, e.g. in terms of geographical location since this may affect energy consumption, etc.)

In 415, the CCL for inference 404 reports the status of the inference to the intent handler 402.

Assuming, for example, that a performance target is not met, the intent handler, in 403, sends a request for training data generation to the CCL for data generation 405 in 416.

In 417, the CCL for training data generation 405 decides about training data specifications and generates training data accordingly which it places in the managed entity 406 in 418. Deciding about ML training specifications may in particular comprise determining which resources of the managed entity 405 are used for the training data generation (e.g. which data processing nodes, which storages, e.g. in terms of geographical location since this may affect energy consumption, etc.)

Further, in 419, the CCL for training data generation 405 reports the status of the training data generation to the intent handler 403 which may then repeat the process of 408, i.e. sends a request to re-train or refine the ML model to the CCL for model training 403.

The intent handler 402 may at any time send an intent report to the intent owner reporting about feasibility and/or fulfilment of expectation, any conflicts, targets that cannot be met etc. The processing results may be provided by the managed entity 406 directly to the component that needs the results (which may be the intent owner itself but possibly also another entity on behalf of which the intent owner 401 acts) in 420.

In the following, options for implementing the approach described above in various architectures are described.

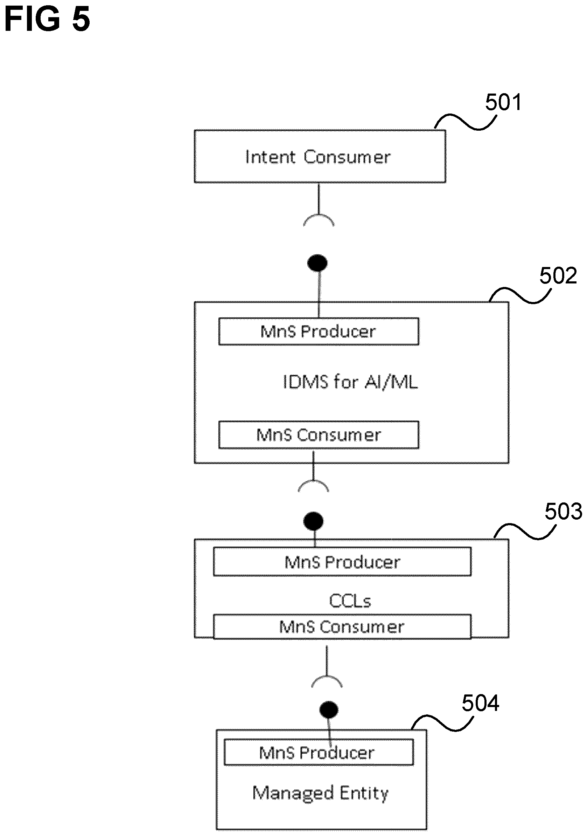

Figure 5 illustrates an implementation option according to a 3GPP system.

In this embodiment, the intent handler 502 acts as management service (MnS) producer with regard to the intent owner 501 and as an MnS consumer with regard to the CCLs 503.

The CCLs 503 act as MnS producer with regard to the intent handler 502 and as MnS consumer with respect to the managed entity 504.

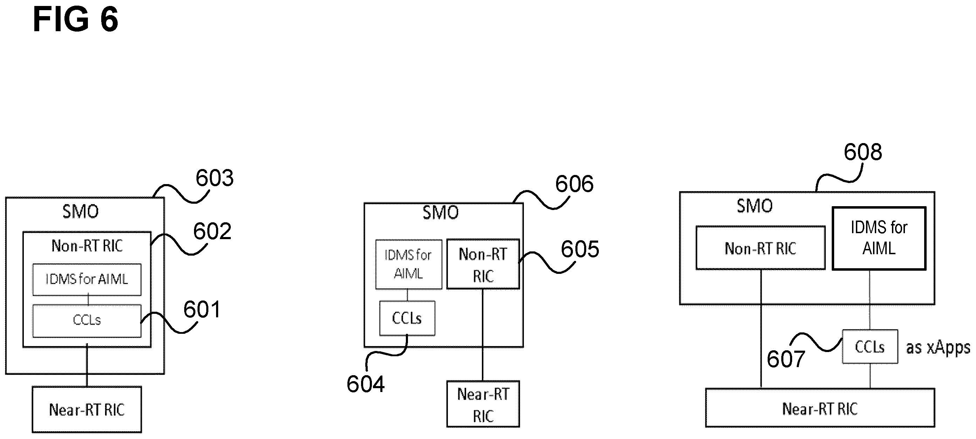

Figure 6 illustrates three implementation options in an O-RAN (Open RAN) architecture.

In a first option, the CCLs 601 are part of a non-real-time RAN intelligent controller (Non-RT RIC) 602 of a SMO (Service Management and Orchestration) 603, for example realized as rApps.

In a second option, the CCLs 604 are not part of a non-real-time RAN intelligent controller (Non-RT RIC) 605 but still part of the SMO 606.

In a third option, the CCLs 607 are external to the SMO 608, e.g. implemented as xApps.

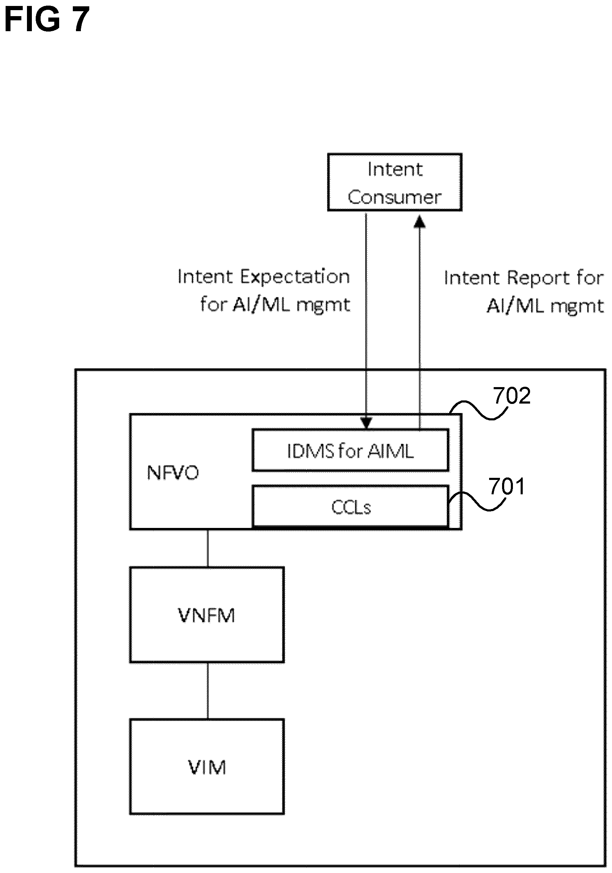

Figure 7 illustrates an implementation option in an ETSI (European Telecommunications Standards Institute) NFV (Network Functions Virtualisation) architecture.

In this option, the Intent handler and the CCLs 701 are part of an NFVO (NFV Orchestrator) 702. CCLs could be implemented as part of an Intent Driven Management Service, not exposed to outside.

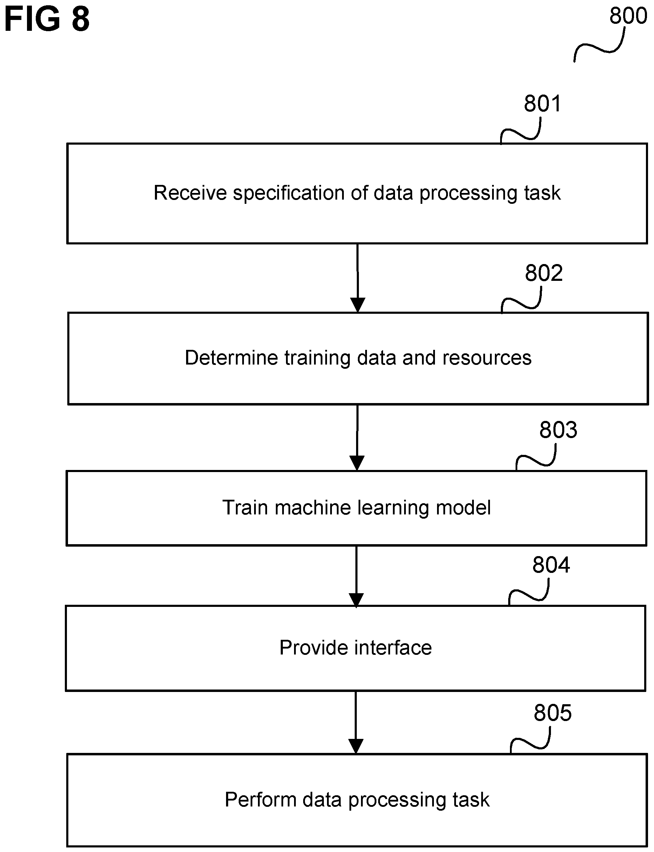

In summary, according to various embodiments, a method is provided as illustrated in figure 8.

Figure 8 shows a flow diagram 800 illustrating a method for providing a machine learning-based data processing service.

In 801, a specification of a data processing task is received, wherein the specification includes requirements, including goals and/or constraints, of the data processing tasks (e.g. in the form of expectations of an intent-based (management or service handling) approach, e.g. the intent model according to 3GPP).

In 802, computational resources for providing the data processing service and training data according to the goals and/or constraints are determined (e.g. an amount of necessary computational resources is estimated and computational resources are allocated accordingly).

In 803, a machine learning model is trained using the determined training data and the determined computational resources to perform the data processing task (i.e. the ML model is trained to perform the data processing task).

In 804, an interface for receiving input data for the data processing task is provided.

In 805, the data processing task is performed on the received input data by the trained machine-learning model (i.e. the ML model is used for inference) using the determined computational resources (i.e. by implementing the trained machine-learning model using the determined computational resources).

According to various embodiments, in other words, the training and provision of an ML model for performing a data processing task (and thus providing an ML data processing service, via a corresponding interface for input data and typically also output data) is performed (or at least controlled and managed, e.g. by controlling various communication network components) by an intent handler (receiving a request for a provision of the data processing service in the form of an intent).

The data processing task is for example a data processing task for providing network analytics (e.g. including predictions).

The method is for example performed by a data processing arrangement (i.e. data processing system comprising one or more data processing devices, e.g. of the communication system 100 or the communication network 200 as described above, see also the implementation examples of figures 5 to 7). The data processing devices may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A method for providing a machine learning-based data processing service, comprising:
receiving a specification of a data processing task, wherein the specification includes requirements, including goals and/or constraints, of the data processing tasks;
determining computational resources for providing the data processing service and training data according to the goals and/or constraints;
training a machine learning model using the determined training data and the determined computational resources to perform the data processing task;
providing an interface for receiving input data for the data processing task; and
performing the data processing task on the received input data by the trained machine-learning model using the determined computational resources.

2. The method of claim 1, wherein the computational resources and training data are determined by determining computational resources and training data which allow fulfilling the goals and/or constraints.

3. The method of claim 1 or 2, wherein the computational resources comprise data processing nodes.

4. The method of claim 3, wherein the data processing nodes are data processing nodes at different geographical locations.

5. The method of any one of claims 1 to 4, wherein determining the computational resources comprises determining first computational resources for training the machine-learning model and second computational resources for performing inference by the machine-learning model to perform the data processing task, wherein the machine learning model is trained using the first computational resources and the trained machine learning model is implemented using the second computational resources.

6. The method of any one of claims 1 to 5, wherein the goals and/or constraints include one or more of a maximum energy consumption of the training and/or inference performed by the machine learning model, a precision of the machine learning model, an accuracy of the machine learning model, an energy efficiency of the training of the of the machine learning model and/or of the machine learning model and a carbon emission of the training of the machine learning model and/or of the machine learning model.

7. The method of any one of claims 1 to 6, further comprising memory resources for providing the data processing service according to the goals and/or constraints, training the machine learning model using the determined memory resources and/or implementing the trained machine-learning model using the determined memory resources.

8. The method of claim 7, wherein the memory resources comprise storage nodes.

9. The method of claim 8, wherein the storage nodes are storage nodes at different geographical locations.

10. The method of any one of claims 1 to 9, comprising providing results of the data processing task, performed on the received input data via the interface.

11. The method of any one of claims 1 to 10, comprising receiving the specification from one or more service consumer devices and providing the interface to the one or more service consumer devices.

12. The method of any one of claims 1 to 11, wherein determining the training data comprises generating the training data using the determined computational resources.

13. The method of any one of claims 1 to 12, further comprising checking feasibility of fulfilling the requirements with regard to available computational resources and declining provision of the data processing task in reaction to a determination that fulfilling the requirements is not feasible.

14. The method of any one of claims 1 to 13, further comprising checking for conflicts caused by performing data processing task and informing a sender of the specification regarding one or more results of performing data processing task.

15. A data processing arrangement configured to perform the method of any one of claims 1 to 14.
